# EUROPÄISCHE PATENTSCHRIFT

(11) **EP 1 462 537 B1**
(45) Veröffentlichungstag und Bekanntmachung des Hinweises auf die Patenterteilung: **02.04.2008**
(21) Anmeldenummer: 04006282.0
(22) Anmeldetag: 17.03.2004
(51) Int. Cl.: C23C 8/40, C23C 8/42, C23C 8/62, F01D 5/28

(54) **Verfahren zur Behandlung der Oberfläche eines aus einer Al-Legierung, insbesondere TiAl-Legierung bestehenden Bauteiles sowie die Verwendung organischer Halogenkohlenstoffverbindungen oder in einer organischen Matrix eingebundener Halogenide**
Process of treatment of an Al alloy surface, particularly a piece of TiAl alloy, and application of organic halocarbon compounds or halogenides bound in an organic matrix
Procédé de traitement d'une surface en alliage de Al, plus particulièrement une pièce en alliage de TiAl, ainsi que l'application de composés organiques halogénocarbones ou d'halogénures liés dans une matrice organique

(30) Priorität: 21.03.2003 DE 10312853; 07.11.2003 DE 10351946
(43) Veröffentlichungstag der Anmeldung: 29.09.2004
(73) Patentinhaber: DECHEMA Gesellschaft für Chemische Technik und Biotechnologie e.V., 60486 Frankfurt (DE)
(72) Erfinder: Schütze, Michael, Prof. Dr.-Ing., 63741 Aschaffenburg (DE); Donchev, Alexander, Dr., 60528 Frankfurt am Main (DE)
(74) Vertreter: Hebing, Norbert

(56) Entgegenhaltungen:
- EP-A- 1 215 289
- DE-A1- 10 017 187

## Beschreibung

Die Erfindung bezieht sich zum Einen auf ein Verfahren zur Behandlung der Oberfläche eines aus einer TiAl-Legierung bestehenden Bauteiles zur Verbesserung seiner Oxidationsbeständigkeit.

Es ist bekannt, dass die Oxidationsbeständigkeit dieser Legierungsklasse durch den Zusatz geringer Mengen von Halogenen deutlich verbessert wird. Zum Einbringen der Halogene stehen die folgenden Verfahren zur Verfügung:
Die Halogene werden der oxidierenden Atmosphäre zugesetzt.
Die Halogene werden dem gesamten Werkstoff zulegiert.
Die Oberfläche eines aus einer solchen Legierung bestehenden Bauteils wird vorbehandelt, bevor es zu seinem bestimmungsgemäßen Einsatz kommt.

Es wird verwiesen auf die offengelegten Patentanmeldungen EP 0 580 081 A, EP 0 770 702 A, DE 196 27 605 C1, DE 100 17 187 A1 und EP1215289 A2.

Die bisher beschriebenen Oberflächenverfahren gehen von anorganischen Halogenverbindungen aus, die in festem, flüssigem oder gasförmigem Zustand für einen bestimmten Zeitraum auf die Oberfläche einwirken. Um gute Effekte zu erreichen, setzen diese Verfahren eine relativ lange Mindesteinwirkungsdauer der Halogenverbindungen auf die Oberfläche voraus oder die Legierung muss während bzw. nach dem Aufbringen der Halogenverbindung aufgeheizt werden.

Es hat sich aber gezeigt, dass selbst mit diesen bekannten Maßnahmen die Oxidationsbeständigkeit von Legierungen aus Titan und Aluminium oberhalb von Temperaturen von ca. 750°C nicht ausreichend erhöht werden kann, so dass solche Legierungen nicht für Bauteile genutzt werden können, deren Einsatz bei solchen Temperaturen erfolgt. Eine Verbesserung des bei diesen Temperaturen unzureichenden Oxidationsverhaltens würde aber einen Einsatz dieser Leichtbauwerkstoffe (Dichte ca. 4 g/cm³) in verschiedenen Hochtemperaturanwendungen, z.B. Flugzeugtriebwerken oder stationären Gasturbinen, und somit das Ersetzen der schweren herkömmlichen Nickelbasissuperlegierungen (Dichte ca. 8 g/cm³) ermöglichen.

Die Erfindung beruht somit auf dem Problem, Bauteile aus einer A TiAl-Legierung für den Hochtemperatureinsatz brauchbar zu machen.

Zur Lösung des Problem sieht die Erfindung ein Verfahren zur Behandlung der Oberfläche eines aus einer TiAl-Legierung bestehenden Bauteiles zur Verbesserung seiner Oxidationsbeständigkeit mit den folgenden Schritten vor:
Bereitstellung des zu behandelnden Bauteils bei Normaltemperatur.
Aufbringen von organischen Halogenkohlenstoffverbindungen oder in einer organischen Matrix eingebundenen Halogeniden auf die Oberfläche des Bauteils.
Erwärmung des Bauteils auf eine Temperatur von wenigstens 700°C.

Bei solchen Temperaturen geht das Halogen eine Verbindung mit dem Aluminium ein und die organischen Anteile verdampfen wenigstens zum Teil.

Die erfindungsgemäße Schutzwirkung beruht auf einer Reaktion der in einer organischen "Matrix" eingebundenen Halogene mit dem Aluminium der Legierung bei hohen Temperaturen. Beim Aufheizen verdampft der organische Träger und die freiwerdenden Halogene können mit dem Aluminium des Werkstoffs unter Bildung von Aluminiumhalogeniden reagieren, deren Oxidation beim Kontakt mit Luft während des Einsatzes im Hochtemperaturbetrieb eine schützende Aluminiumoxidschicht auf dem Werkstück ausbildet, die das Material vor einem weiteren Angriff abschirmt und somit dessen Integrität bewahrt. Dieses Verfahren ist für Bauteile aus einer AlTi-Legierung nutzbar, obwohl zu erwarten wäre, dass ähnliche Reaktionen mit Titan den positiven Effekt zunichte machen, da Titanoxid, welches sich bei hohen Temperaturen aus den Titanhalogeniden an Luft bildet, keine Schutzwirkung besitzt. Tatsächlich finden aber keine Reaktionen mit Titan, dem zweiten Hauptlegierungsbestandteil, statt.

Das Verfahren sieht weiterhin vor, dass die nach dem Aufbringen von organischen Halogenkohlenstoffverbindungen oder in einer organischen Matrix eingebundenen Halogeniden vorgesehene Erwärmung erstmals beim bestimmungsgemäßen Einsatz des Bauteils erfolgt. Damit entfallen die bisher nötigen Verfahrensschritte der Vor- bzw. Nachbehandlung. Die organischen Halogenkohlenstoffverbindungen, z.B. PTFE, werden vielmehr direkt auf das Werkstück aufgetragen, ohne zuvor dessen Struktur oder Oberfläche z. B. durch eine Temperturerhöhung zu verändern. Sie entfalten ihre Schutzwirkung beim eigentlichen Hochtemperaturbetrieb, d.h. direkt beim erstmaligen Einsatz des Bauteils.

Das Aufbringen kann durch Sprühen, Eintauchen in z.B. eine viskose, lackartige Flüssigkeit oder Suspension, Verstreichen einer lackartigen Flüssigkeit mit einem Pinsel oder einer Rolle oder andere Oberflächenbehandlungsverfahren erfolgen. Die Größe oder Geometrie der Werkstücke spielt hierbei keine Rolle.

Das der Erfindung zu Grunde liegende Problem wird insbesondere auch durch die Verwendung von organischen Halogenkohlenstoffverbindungen oder in einer organischen Matrix eingebundenen Halogeniden zur Behandlung der Oberfläche von aus einer TiAl-Legierung bestehenden Bauteilen, die für den Einsatz bei Temperaturen von wenigstens 700°C vorgesehen sind zur Verbesserung deren Oxidationsbeständigkeit gelöst.

Organische Halogenkohlenstoffverbindungen oder in einer organischen Matrix eingebundene Halogenide können nämlich anders als anorganische Halogenkohlenstoffverbindungen auf das kalte Bauteil aufgebracht werden. Die die Schutzwirkung bewirkende Reaktion des Halogenides mit dem Aluminium erfolgt dabei beim ersten Einsatz des Bauteiles im Hochtemperaturbetrieb, der typischerweise zwischen 700° und 1000° C liegt.

Die Verwendung von organischen Halogenkohlenstoffverbindungen oder in einer organischen Matrix eingebundenen Halogeniden hat sich insbesondere bei Legierungen bewährt, die neben Titan zwischen 20 bis 75 at. % Aluminium und in der Gesamtsumme zwischen 0 und 30 at. % weiterer Legierungszusätze enthält, wobei der Titangehalt der Legierung entsprechend reduziert ist.

Bei den weiteren Legierungszusätzen handelt es sich vorzugsweise um die Elemente Bor oder Chrom oder Eisen oder Kohlenstoff oder Kupfer oder Magnesium oder Mangan oder Molybdän oder Niob oder Phosphor oder Silber oder Silizium oder Tantal oder Vanadium oder Wolfram oder Yttrium oder Zirkonium oder eine Kombination mehrerer der zuvor genannten Elemente.

Im Folgenden soll anhand einiger Messergebnisse, die durch die Diagramme in den Figuren 1 bis 5 veranschaulicht sind, die Erfindung näher erläutert werden. Es zeigen:
- Fig. 1:: Thermogravimetrische Ergebnisse aus Oxidationsversuchen an unbehandeltem und behandeltem TiAl-Material (Ti-46.5Al-4(Cr,Nb,Ta,B))
- Fig. 2:: Thermogravimetrisches Ergebnis von mit PVC behandeltem Ti-46.5Al-4(Cr,Nb,Ta,B) bis 960h
- Fig. 3:: Ergebnisse von thermozyklischen 24 Stunden-Oxidationsversuchen von unbehandeltem, F-implantiertem und mit PTFE besprühtem Ti-46.5Al-4(Cr, Nb, Ta, B); Implantation: 15 keV, 1 × 1017 F/cm2
- Fig. 4:: Ergebnisse von thermozyklischen 24 Stunden-Oxidationsversuchen mit PTFE besprühtem, in PTFE eingetauchtem und F-implantiertem Ti-46.5Al-4(Cr, Nb, Ta, B); Implantation: 15 keV, 1 × 1017 F/cm2
- Fig. 5:: Ergebnisse von thermozyklischen 24 Stunden-Oxidationsversuchen von Ti-46.5Al-4(Cr, Nb, Ta, B) bis 2400h

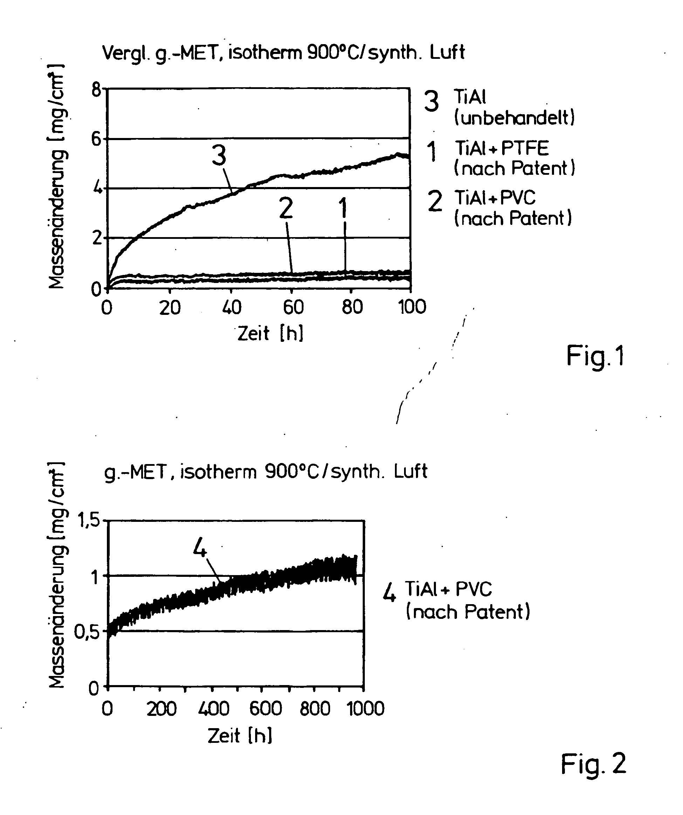

Ohne weitere Vorbehandlung zeigen z.B. mit PTFE und PVC besprühte TiAl-Proben (Kurven 1 und 2) eine deutlich verlangsamte Oxidationskinetik verglichen mit unbehandeltem TiAl (Kurve 3), was man den thermogravimetrischen Kurven in Figur 1 entnehmen kann. Proben der technisch relevanten TiAl-Legierung γ-MET, Ti-46.5Al-4(Cr, Nb, Ta, B), wurden bei 900°C an synthetischer Luft isotherm oxidiert und deren Massenänderung in Abhängigkeit von der Zeit aufgezeichnet. Die Waage wurde zu Beginn jeder Messung, die erst gestartet wurde, sobald die gewünschte Temperatur erreicht war, auf Null tariert, so dass die Massenabnahme der mit PTFE bzw. PVC behandelten Proben während des Aufheizens nicht dokumentiert ist. Der positive Effekt der Halogenbehandlung auf das isotherme Oxidationsverhalten von γ-MET wurde im Falle von PVC über den Zeitraum von 40 Tagen (= 960 Stunden) ohne negative Veränderungen z.B. Break-Away-Verhalten beobachtet (Fig. 2, Kurve 4).

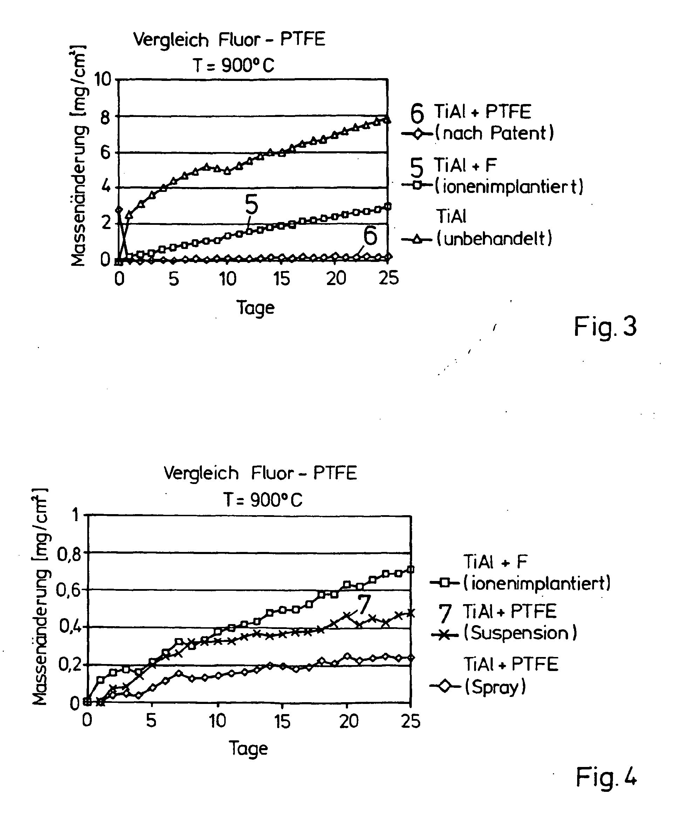

Es konnte auch eine signifikante Steigerung der Oxidationsbeständigkeit unter isothermer Auslagerung, wie sie eine thermogravimetrische Messung darstellt, durch die Implantation von Fluorionen in die Oberfläche erzielt werden (Fig. 3, Kurve 5). Dieses positive Verhalten ist auch unter thermozyklischer Beanspruchung zu beobachten, wobei eine mit PTFE behandelte Probe (Fig. 3, Kurve 6) sogar ein noch besseres Verhalten als die zum Vergleich mit Fluorionen implantierte Probe zeigt (Fig. 3, Kurve 5). Diese thermozyklischen Versuche wurden bei 900°C in einem offenen Rohrofen an Laborluft durchgeführt. Die Proben wurden für jeweils 24 Stunden auf Temperatur belassen. Das Wiegen erfolgte nach Abkühlen der Proben auf Raumtemperatur außerhalb des Ofens. Die in Figur 3 gezeigte implantierte Fluormenge betrug 1 × 1017 F/cm² bei einer Implantationsenergie von 15 keV. Durch eine Verdoppelung der Fluordosis bei der Implantation auf 2 × 1017 F/cm² konnte die Oxidationsbeständigkeit noch weiter gesteigert werden, jedoch bleiben die Verbesserungen, die nach der Behandlung mit PFTE durch Aufsprühen bzw. Eintauchen in eine Suspension erzielt wurden, unerreicht (Fig. 4, Kurven 7).

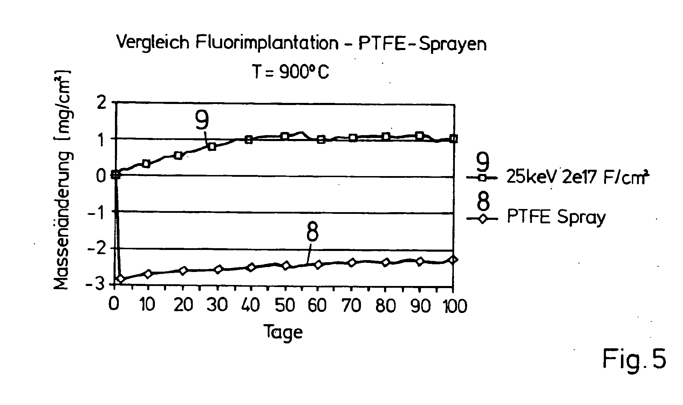

Der Vergleich zwischen Ionenimplantation und PTFE-Behandlung wurde auf 100 Tage (= 2400 Stunden) ausgedehnt. Die totale Massenzunahme der PTFE-Probe (Kurve 8) beträgt weniger als 1 mg/cm² und ist somit geringer als die der F-implantierten Probe (Kurve 9) (ca. 1 mg/cm²), bei der zusätzlich noch kleine Massenverluste durch Abplatzen von Oxidstückchen beobachtet wurden (Fig. 5). In dieser Figur wurde das Probengewicht vor der Auslagerung als Nullpunkt gewählt, so dass die Massenänderung der PTFE-Probe bedingt durch das Abdampfen des organischen Restes beim Aufheizen im negativen Bereich verläuft. Die Oberfläche der PTFE-Probe ist auch nach 100 Tagen völlig grau, was auf eine durchgehende Aluminiumoxidschicht hindeutet. Die F-implantierte Probe hingegen weist einige wenige gelbe Stellen auf. Diese Stellen lassen sich auf Titanoxid zurückführen. An diesen Stellen ist der Werkstoff nur noch unzureichend geschützt.

## Patentansprüche

1. Verfahren zur Behandlung der Oberfläche eines aus einer TiAl-Legierung bestehenden Bauteiles zur Verbesserung seiner Oxidationsbeständigkeit mit den folgenden Schritten:
Bereitstellung des zu behandelnden Bauteils bei Normaltemperatur.
Aufbringen von organischen Halogenkohlenstoffverbindungen oder in einer organischen Matrix eingebundenen Halogeniden auf die Oberfläche des Bauteils.
Erwärmung des Bauteils auf eine Temperatur von wenigstens 700°C.

2. Verfahren nach Anspruch 1, **dadurch gekennzeichnet, dass** die nach dem Aufbringen von organischen Halogenkohlenstoffverbindungen oder in einer organischen Matrix eingebundenen Halogeniden vorgesehene Erwärmung erstmals beim bestimmungsgemäßen Einsatz des Bauteils erfolgt.

3. Verfahren nach einem der Ansprüche 1 oder 2, **dadurch gekennzeichnet, dass** eine Fluorkohlenstoffverbindung verwendet wird, durch die eine Fluor-Konzentration auf der Werkstoffoberfläche zwischen 3,5 x 10-12 mol Fluor/cm² und 6,5 x 10-4 mol Fluor/cm² eingestellt wird.

4. Verfahren nach einem der Ansprüche 1 bis 3, **dadurch gekennzeichnet, dass** die Halogenverbindung durch ein Tauchverfahren, durch Verstreichen mit einem Pinsel, durch ein Sprühverfahren, durch ein anderes bekanntes Applikationsverfahren oder durch eine Kombination mehrerer Applikationsverfahren aufgebracht wird.

5. Verwendung von organischen Halogenkohlenstoffverbindungen oder in einer organischen Matrix eingebundenen Halogeniden zur Behandlung der Oberfläche von aus einer TiAl-Legierung bestehenden Bauteilen, die für den Einsatz bei Temperaturen von wenigstens 700°C vorgesehen sind, zur Verbesserung der Oxidationsbeständigkeit dieser Bauteile.

6. Verwendung nach Anspruch 5, **dadurch gekennzeichnet, dass** die Bauteile vorgesehen sind für den Einsatz bei Temperaturen von höchstens 1100°C.

7. Verwendung nach einem der Ansprüche 5 oder 6, **dadurch gekennzeichnet, dass** die Legierung neben Titan zwischen 20 bis 75 at. % Aluminium und in der Gesamtsumme zwischen 0 und 30 at. % weiterer Legierungszusätze enthält.

8. Verwendung nach Anspruch 7, **dadurch gekennzeichnet, dass** in der Legierung als weitere Legierungszusätze die Elemente Bor oder Chrom oder Eisen oder Kohlenstoff oder Kupfer oder Magnesium oder Mangan oder Molybdän oder Niob oder Phosphor oder Silber oder Silizium oder Tantal oder Vanadium oder Wolfram oder Yttrium oder Zirkonium oder eine Kombination mehrerer der zuvor genannten Elemente vorliegen können.

## Claims

1. Process for the treatment of the surface of a structural part consisting of a TiAl alloy for improving its resistance to oxidation, with the following steps:
provision, at normal temperature, of the structural part to be treated
applying organic halogenated carbon compounds or halides bound into an organic matrix onto the surface of the structural part,
heating the structural part to a temperature of at least 700 °C.

2. Process according to claim 1 **characterised in that** the heating provided for after applying organic halogenated carbon compounds or halides bound into an organic matrix is carried out for the first time during the appropriate use.

3. Process according to one of claims 1 or 2 **characterised in that** a fluorinated carbon compound is used by means of which a fluorine concentration of between 3.5 x 10-12 mole fluorine/cm² and 6.5 x 10-4 mole fluorine/cm² is adjusted on the material surface.

4. Process according to one of claims 1 to 3 **characterised in that** the halogen compound is applied by an immersion process, by brush application with a brush, by a spray process, by another known application process or by a combination of several application processes.

5. Use of organic halogenated carbon compounds or halides bound into an organic matrix for the treatment of the surface of structural parts consisting of a TiAl alloy, which structural parts are intended to be used at temperatures of at least 700 °C, for improving the resistance to oxidation of these structural parts.

6. Use according to claim 5 **characterised in that** the structural parts are intended to be used at temperatures of maximum 1100 °C.

7. Use according to one of claims 5 or 6 **characterised in that** the alloy contains, besides titanium, between 20 and 75 at% of aluminium and, in total, between 0 and 30 at% of further alloying additives.

8. Use according to claim 7 **characterised in that** the elements of boron or chromium or iron or carbon or copper or magnesium or manganese or molybdenum or niobium or phosphorus or silver or silicon or tantalum or vanadium or tungsten or yttrium or zirconium or a combination of several of the heretofore mentioned elements may be present in the alloy as further alloying additives.

## Revendications

1. Procédé pour le traitement de la surface d'une pièce de construction en alliage TiAl, destiné à améliorer la résistance à l'oxydation de ladite pièce et comprenant les étapes suivantes :
Mise à disposition de la pièce de construction à traiter, la température étant normale.
Application de fluorocarbones organiques, ou bien d'halogénures incorporés dans une matrice organiques, sur la surface de la pièce de construction.
Réchauffement de la pièce de construction à une température d'au moins 700°C.

2. Procédé selon la revendication 1, **caractérisé en ce que** le réchauffement prévu après l'application de fluorocarbones organiques ou d'halogénures incorporés dans une matrice organique est réalisé pour la première fois lors de l'utilisation à laquelle de la pièce de construction est destinée.

3. Procédé selon l'une des revendications 1 ou 2, **caractérisé en ce qu'**on utilise un fluorocarbone permettant d'atteindre sur la surface du matériau une concentration en fluore comprise entre 3,5 x 10-12 mol de fluore/cm² et 6,5 x 10-4 mol de fluore/cm².

4. Procédé selon l'une des revendications 1 à 3, **caractérisé en ce que** le composés halogéné est appliqué par un procédé d'immersion, en l'étalant au pinceau, par un procédé d'atomisation, par un autre procédé d'application connu ou en combinant plusieurs procédés d'application.

5. Utilisation d'halocarbones organiques ou d'halogénures incorporés dans une matrice organique pour le traitement de la surface de pièces de construction en alliage TiAl, lesdites pièces étant destinées à une utilisation à des températures d'au moins 700 °C, pour ainsi améliorer leur résistance à l'oxydation.

6. Utilisation selon la revendication 5, **caractérisée en ce que** les pièces de construction sont destinées à une utilisation à des températures ne dépassant pas 1100 °C.

7. Utilisation selon l'une des revendications 5 ou 6, **caractérisée en ce que** ledit alliage contient, outre le titane, entre 20 et 75 % atomiques d'aluminium ainsi que, au total, entre 0 et 30 % atomiques d'autres composants d'alliage.

8. Utilisation selon la revendication 7, **caractérisée en ce que** l'alliage peut contenir, en tant qu'autres composants d'alliage, les éléments bore ou chrome ou fer ou carbone ou cuivre ou magnésium ou manganèse ou molybdène ou niobium ou phosphore ou argent ou silicium ou tantale ou vanadium ou tungstène ou yttrium ou zirconium ou une combinaison de plusieurs des éléments précités.
